Europäisches Patentamt

European Patent Office

Office européen des brevets

(11) Numéro de publication: **0 312 437 B1**

# FASCICULE DE BREVET EUROPEEN

(45) Date de publication de fascicule du brevet: **17.06.92**  (51) Int. Cl.⁵: **B65G 45/00**

(21) Numéro de dépôt: **88402556.0**

(22) Date de dépôt: **11.10.88**

(54) **Dispositif de nettoyage à bande rotative sans fin, notamment pour le nettoyage d'une bande transporteuse ou de surfaces de sustentation d'objets.**

(30) Priorité: **16.10.87 FR 8714869**

(43) Date de publication de la demande:
**19.04.89 Bulletin 89/16**

(45) Mention de la délivrance du brevet:
**17.06.92 Bulletin 92/25**

(84) Etats contractants désignés:
**BE CH DE ES GB IT LI NL SE**

(56) Documents cités:
**DE-A- 2 950 346**
**DE-U- 8 623 183**
**US-A- 4 073 376**

(73) Titulaire: **V I F E**
**12, rue Saint-Simon**
**F-78000 Versailles(FR)**

(72) Inventeur: **Chupin, Guillaume**
**9, rue du Pont Colbert**
**F-78000 Versailles(FR)**
Inventeur: **Dandeville, Denis**
**45, rue Neunkirchen**
**F-78200 Mantes la Ville(FR)**

(74) Mandataire: **Marquer, Francis et al**
**Cabinet Moutard 35, Avenue Victor Hugo**
**F-78960 Voisins le Bretonneux(FR)**

# Description

La présente invention concerne un dispositif de nettoyage à bande rotative sans fin utilisable notamment, mais non exclusivement, pour le nettoyage en continu d'une bande transporteuse servant à la manutention d'objets ou de produits.

D'une manière générale, on sait que dans ce type d'application, il a déjà été proposé, notamment par le brevet DE-A-2 950 346, une installation de nettoyage pour bande transporteuse faisant intervenir une bande de nettoyage rotative montée sur deux rouleaux de différents diamètres, la partie supérieure de la bande de nettoyage étant maintenue appliquée contre la bande transporteuse, tandis que sa partie inférieure plonge, au niveau du rouleau de plus grand diamètre, dans un bac alimenté en liquide de nettoyage. Ce bac de nettoyage est prolongé par un bac d'égouttage qui s'étend au-dessous du rouleau de plus petit diamètre auquel est associé un rouleau essoreur.

Ainsi, la bande de nettoyage, entraînée par le rouleau de plus grand diamètre, passe successivement dans le bac de nettoyage, remonte ensuite jusqu'au rouleau de plus petit diamètre où elle est essorée, puis revient au rouleau de plus grand diamètre en défilant contre la bande transporteuse, en sens inverse du sens de défilement de celle-ci.

Le liquide de nettoyage extrait de la bande de nettoyage par le rouleau essoreur se déverse dans le bac d'égouttage et est donc évacué.

Il s'avère, à l'usage, que ce type d'installation présente un certain nombre d'inconvénients.

En particulier, le liquide de nettoyage contenu dans le bac de nettoyage, dans lequel vient plonger la partie souillée de la bande, sera continuellement sali et devra donc être renouvelé en permanence. Cette consommation sera en outre accrue par la quantité de liquide extraite par le rouleau essoreur et qui s'écoule dans le bac d'égouttage.

A ces inconvénients s'ajoute celui résultant du fait que dans de nombreuses applications, l'action d'un seul rouleau d'essorage est insuffisante pour extraire la totalité des impuretés prélevées sur la bande transporteuse par la bande de nettoyage. Dans ce cas, la bande de nettoyage ramènera, sur la bande transporteuse, les fractions non extraites de ces impuretés et l'installation deviendra rapidement inefficace.

Bien entendu, ce type de problèmes se pose également dans le cas où une installation de ce genre est utilisée pour le nettoyage d'objets que l'on fait défiler sur la bande de nettoyage à une vitesse de défilement différente de celle de ladite bande.

L'invention a donc tout d'abord pour but de supprimer ces inconvénients.

Elle propose, à cet effet, un dispositif de nettoyage dans lequel, d'une façon analogue à celle divulguée dans le Modèle d'utilité allemand DE-U-8 623 183, la bande de nettoyage sans fin est montée sur au moins trois rouleaux axés parallèlement les uns aux autres, à savoir : deux rouleaux principaux dont l'un au moins est entraîné en rotation, et un rouleau secondaire disposé dans l'espace compris entre les deux rouleaux principaux, ces trois rouleaux étant agencés de manière à ce que la bande de nettoyage suive, dans sa partie supérieure, un trajet rectiligne allant du premier au second rouleau principal en formant un plan de nettoyage.

Selon l'invention, ce dispositif est caractérisé en ce que, dans sa partie inférieure, la bande suit un parcours sinueux comprenant deux portions situées de part et d'autre dudit rouleau secondaire, à savoir : une portion amont rectiligne s'étendant du second rouleau principal au rouleau secondaire, dans laquelle la bande est soumise en continu à un lavage et une portion aval rectiligne s'étendant du rouleau secondaire au premier rouleau principal, au niveau de laquelle la bande est imprégnée d'un liquide de nettoyage servant à effectuer le susdit nettoyage, et en ce que les deux rouleaux principaux sont partiellement immergés dans le liquide de nettoyage, respectivement dans le liquide de lavage, le rouleau secondaire et la bande supportée par lui étant en dehors du liquide.

Ce dispositif pourra en outre avantageusement comprendre un premier rouleau d'essorage agissant sur la bande au niveau du rouleau secondaire, de manière à extraire le liquide de lavage demeuré sur la bande et un deuxième rouleau d'essorage venant s'appliquer sur la portion de bande passant sur le premier rouleau principal. De même, deux bacs pourront être respectivement disposés sous la bande dans les zones de lavage et d'application de liquide de nettoyage pour recueillir séparément les liquides utilisés dans ces deux zones.

Selon un mode d'exécution particulièrement avantageux de l'invention, le dispositif de nettoyage comprend un rouleau secondaire faisant office de rouleau de tension, ce rouleau secondaire étant disposé entre les deux rouleaux principaux de manière à ce que la partie inférieure de la bande suive un parcours sinueux comprenant un trajet ascendant compris entre le deuxième rouleau principal et le rouleau de tension, et un trajet descendant allant du rouleau de tension au premier rouleau principal.

Les moyens de lavage peuvent comprendre une rampe d'injection de liquide de lavage, émettant sous pression une succession de jets sur le trajet ascendant de la bande. Dans ce cas, le bac de lavage pourra consister en un bac d'égouttage.

Bien entendu, dans le cas où ce dispositif s'applique au nettoyage d'une bande transporteuse, la face supérieure de la bande de nettoyage qui forme le plan de nettoyage est maintenue appliquée contre la bande transporteuse et est entraînée de manière à posséder une vitesse de défilement différente de celle de la bande transporteuse. Toutefois, l'invention ne se limite pas à ce type d'application.

Comme précédemment mentionné, l'invention a également pour but de résoudre les problèmes relatifs au nettoyage en continu, à l'aide d'un dispositif du type de celui précédemment décrit, des surfaces de sustentation d'objets transportés par un ou plusieurs convoyeurs.

On sait que pour effectuer un tel nettoyage, deux techniques sont actuellement utilisées :
La première de ces techniques consiste à canaliser le flux d'objets circulant sur un convoyeur pour l'amener sur la bande de nettoyage d'un dispositif du type de celui précédemment décrit, disposé sur l'un des côtés latéraux du transporteur. Dans ce cas, les objets, poussés les uns par les autres, sont amenés à circuler sur la bande en sens inverse de son sens de défilement, de sorte qu'ils subissent un frottement intense au niveau de leur surface de sustentation, qui produit le nettoyage. Les objets sont ensuite ramenés sur la bande après avoir été nettoyés.

La seconde technique consiste à interposer le dispositif de nettoyage entre deux convoyeurs disposés bout à bout, l'un de ces convoyeurs amenant les objets sales sur la bande de nettoyage, tandis que l'autre est destiné récupérer ces objets une fois nettoyés.

Il s'avère que ces deux techniques précédemment mentionnées, présentent un certain nombre d'inconvénients.

Du fait qu'elle défile en sens inverse du sens d'avance du convoyeur, lors de leur passage sur la bande, les objets seront freinés, voire même stoppés brutalement, jusqu'à ce qu'ils soient poussés par les objets suivants. Ceci provoque donc un phénomène d'accumulation et des chocs importants entre les objets ainsi immobilisés ou freinés et les nouveaux objets arrivant à la vitesse du convoyeur dans la zone d'accumulation. Il s'ensuit donc un risque important de détérioration des objets qui est inadmissible, en particulier lorsque ces objets sont fragiles et consistent par exemple en des récipients de verre.

Par ailleurs, le freinage imprimé par la bande de nettoyage conduit à limiter considérablement la vitesse de défilement du convoyeur et, par conséquent, son débit.

La première solution présente en outre l'inconvénient dû au fait que l'on ramène sur le même convoyeur les objets une fois nettoyés. Il est clair en effet que la portion de bande sur laquelle les objets sont ramenés risque d'être souillée par les objets présents avant le nettoyage et, qu'en conséquence, ces objets risquent d'être à nouveau salis.

La seconde solution ne présente pas cet inconvénient puisque les objets sont ramenés sur un deuxième convoyeur qui peut être constamment nettoyé. Toutefois, cette solution demeure plus coûteuse et est, de ce fait, fréquemment écartée.

L'invention a donc également pour but de supprimer ces inconvénients.

Elle propose un dispositif de nettoyage comportant, d'une façon analogue à celle précédemment décrite, une bande de nettoyage sans fin montée entre au moins deux rouleaux, dont la partie supérieure comprise entre ces deux rouleaux forme une aire de nettoyage des objets, et dont la partie inférieure est nettoyée en continu par des moyens de nettoyage. Ce dispositif comprend en outre des moyens permettant d'assurer le transfert des objets provenant d'un convoyeur sur l'aire de nettoyage, des moyens permettant d'entraîner la bande de nettoyage dans le sens de l'avance des objets, mais à une vitesse supérieure à celle-ci, et des moyens de déflexion s'étendant sur ladite aire de nettoyage, de manière à ralentir l'avance des objets et les guider vers une aire de sortie du dispositif.

Avantageusement, le dispositif précédemment défini sera placé contre une bordure longitudinale du convoyeur et comprendra, en amont de l'aire de nettoyage, une aire d'accumulation dans laquelle les objets provenant du convoyeur seront transférés, grâce à des moyens de transfert et seront temporairement stockés. Cette aire d'accumulation présente alors une sortie débouchant sur l'aire de nettoyage en un emplacement relativement distant de la bordure de la bande de nettoyage adjacente au convoyeur. Les susdits moyens de déflexion s'étendent alors obliquement par rapport à l'axe longitudinal de la bande de nettoyage depuis la sortie du dispositif d'accumulation jusqu'à une aire de sortie située sur le convoyeur, en aval du susdit dispositif de transfert.

Dans le cas où le convoyeur consiste en un transporteur à bande, pour éviter que les objets une fois nettoyés ne soient souillés à nouveau par la bande, le dispositif pourra en outre comprendre des moyens de nettoyage agissant sur la bande entre la zone de transfert des objets sur l'aire d'accumulation et l'aire de sortie du dispositif de nettoyage.

Ces moyens de nettoyage deviennent inutiles dans le cas où le convoyeur est constitué par deux transporteurs à bande disposés bout à bout et où le dispositif de nettoyage est disposé au niveau de la jonction entre ces deux transporteurs.

Des modes de réalisation de l'invention seront décrits ci-après, à titre d'exemples non limitatifs, avec référence aux dessins annexés dans lesquels :

La figure 1 est une vue en coupe verticale schématique d'un dispositif de nettoyage selon l'invention, utilisable pour nettoyer aussi bien une bande transporteuse que la surface de sustentation d'objets ; et

La figure 2 est une vue de dessus d'un appareil de nettoyage de la surface de sustentation d'objets, équipant un convoyeur.

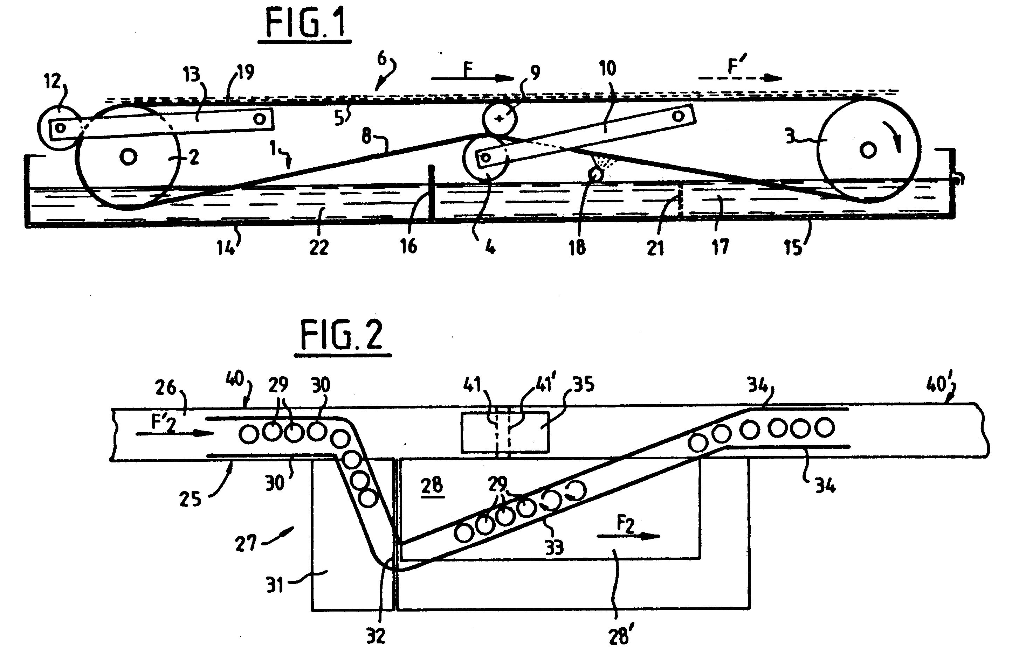

Dans l'exemple représenté sur la figure 1, le dispositif de nettoyage fait intervenir une bande de nettoyage sans fin 1 monté sur trois rouleaux axés parallèlement les uns aux autres, à savoir : deux rouleaux 2, 3 principaux situés à l'intérieur de la boucle formée par la bande 1 et un rouleau secondaire 4 situé l'extérieur de celle-ci, ces trois rouleaux 2, 3, 4 étant agencés de manière à ce que la bande présente, dans sa partie supérieure, un tronçon rectiligne 5, de préférence horizontal, formant une aire de nettoyage 6 allant du rouleau 2 au rouleau 3 et forme, dans sa partie inférieure, un parcours sinueux comprenant un trajet ascendant 7 compris entre les rouleaux 3 et 4 puis un trajet descendant 8 allant du rouleau 4 au rouleau 2.

Dans cet exemple, le rouleau secondaire 4 vient comprimer la bande 1 sur un rouleau de soutien 9 du tronçon horizontal 6, cet ensemble 4, 9 constituant ainsi un dispositif d'essorage de la bande.

La pression d'application du rouleau secondaire 4 sur le rouleau d'appui 9 peut être réglée grâce au fait que le rouleau secondaire 4 est monté sur une structure oscillante 10 à position angulaire réglable.

Par ailleurs, sur la partie du rouleau 2 recouverte par la bande 1 vient prendre appui un rouleau essoreur 12 également monté sur une structure oscillante 13.

Les deux rouleaux principaux 2, 3 sont partiellement immergés à l'intérieur de deux bacs respectifs 14, 15 partiellement remplis de liquide qui s'étendent dans un volume situé au droit de la bande 1. Dans cet exemple, ces deux bacs 14, 15 sont jointifs et présentent une paroi commune 16 qui s'étend transversalement au-dessous du trajet descendant 8 de la bande 1, à proximité du rouleau secondaire 4.

Dans le volume libre compris entre la surface du liquide 17 contenu dans le bac 15 et le trajet ascendant 7 de la bande 1, est en outre prévue une rampe de lavage 18, dont la fonction sera précisée ci-après.

Sur cette figure, on a également représenté, en traits interrompus, une fraction 19 de la partie inférieure de la bande d'un convoyeur contre laquelle est appliquée l'aire de nettoyage 6 du dispositif, étant entendu que ce dernier pourrait tout aussi bien servir au nettoyage d'objets suivant un trajet forcé sur ladite aire de nettoyage 6.

Le fonctionnement du dispositif précédemment décrit est alors le suivant :

la bande 1 entraînée par le rouleau 3 (accouplé à un moteur non représenté) défile au niveau de l'aire de nettoyage 6 en sens inverse du sens de défilement F' de la fraction représentée 19 de la bande du convoyeur. De ce fait, la bande de nettoyage 1 assure une friction de la bande du convoyeur.

Lorsqu'elle parvient au rouleau 3, la bande 1 est donc chargée des impuretés prélevées sur la bande du convoyeur, et il convient donc de les éliminer de manière à ce qu'au niveau du rouleau 2 la bande de nettoyage soit continuellement propre.

A cet effet, dans la partie inférieure du rouleau 3, la bande 1 vient plonger dans le liquide 17 contenu dans le bac de lavage 15 où elle commence à perdre une fraction de ses impuretés. Ce lavage est ensuite poursuivi grâce à l'action des jets émis par la rampe 18 qui favorise le décrochage des impuretés. Il se termine entre les rouleaux 4 et 9 par l'essorage de la bande 1 qui permet l'extraction du liquide demeuré sur la bande 1 dans lequel se trouve dissout et en suspension, le reste des impuretés. Le liquide d'essorage tombe alors dans le bac de lavage 15. Du fait qu'il ne s'agit que d'un lavage et que le liquide contenu dans le bac 15 subit une décantation, ce liquide ne nécessite pas un renouvellement fréquent. A titre d'exemple, il peut consister en un mélange d'eau et d'agent mouillant. En outre, un filtre 21 pourra être avantageusement interposé entre la zone où plonge le rouleau 3 et la zone recevant le liquide d'essorage.

A la fin du trajet descendant 8, la bande 1 ainsi lavée et essorée plonge dans le liquide de nettoyage 22 contenu dans le bac 14 qui peut, par exemple, consister en un liquide détergent. Ce liquide 22, dont la pénétration à l'intérieur de la bande 1 est favorisée par le lavage, est destiné à servir au nettoyage effectué au niveau de la surface de nettoyage de la bande.

Cette phase d'absorption de liquide de nettoyage se termine par l'essorage produit par le rouleau essoreur 12 la sortie duquel la bande 1 se trouve imprégnée de façon homogène et propre. Le liquide résiduel produit par cet essorage retombe alors dans le bac 14.

Il est clair que du fait que la bande a subi un lavage avant de parvenir dans la zone d'imprégnation, le liquide de nettoyage 22 sera moins rapidement pollué et ne nécessitera pas de renouvellement fréquent.

Comme précédemment mentionné, le dispositif peut servir au nettoyage du fond d'objets transportés par un convoyeur.

A cet effet, le dispositif pourra être disposé contre l'une 25 des bordures longitudinales d'un convoyeur, comme représenté dans l'exemple illustré sur la figure 2.

Dans cet exemple, le convoyeur consiste en un transporteur à bande 26, et le dispositif de nettoyage 27 est disposé de manière à ce que l'aire de nettoyage 28 soit directement adjacente à la bande 26 et à un même niveau que celle-ci, sans interposition d'un élément quelconque d'espacement.

L'accès des objets 29 véhiculés par la bande 26 du convoyeur sur l'aire de nettoyage 28 du dispositif 27 est assuré par l'intermédiaire d'éléments de transfert, par exemple des déflecteurs 30 et d'une table d'accumulation 31 dont la sortie 32 débouche à l'entrée de l'aire de nettoyage 28 sur une région latérale située à l'opposé de la bande 26 du convoyeur.

Les moyens de déflexion 30 sont alors agencés de manière à canaliser les objets 29 sur la table d'accumulation 31 sans provoquer de ralentissement notoire susceptible d'engendrer des heurts des objets 29 les uns contre les autres.

Cette table d'accumulation 31, qui a été simplement représentée par un bloc, peut être d'un type connu et ne sera donc pas décrite en détail.

A la sortie 32 de la table d'accumulation 31, les objets entraînés par la bande de nettoyage 28′ qui défile alors dans le même sens (flèche $F_2$) que la bande du convoyeur mais à une vitesse de préférence plus élevée, sont guidés par une rampe de déflexion oblique 33 orientée vers le bande 26. Les objets 29 seront donc amenés à glisser le long de cette rampe 33 avec une vitesse longitudinale inférieure à celle de la bande de nettoyage 28′. Il s'en suivra donc un effet de friction exercé par la bande 28′ sur la surface de sustentation des objets 29. Par ailleurs, dans le cas où les objets 29 présentent une base de forme arrondie, ils seront en outre soumis à un mouvement de rotation sur eux-mêmes en raison des forces de frottement engendrées par la rampe 33.

Il convient de remarquer que, grâce au fait que la rampe 33 s'étend obliquement par rapport au sens d'avance de la bande de nettoyage 28′, l'action de la bande de nettoyage 28′ s'effectuera transversalement par rapport au sens de l'avance des objets 29. De ce fait, au cours de leur avance, les objets 29 seront toujours nettoyés par une zone propre de la bande de nettoyage 28′ et ne recevront pas les impuretés extraites d'un autre objet 29 précédemment nettoyé.

Le retour des objets nettoyés 29 sur la bande 26 du convoyeur s'effectue au moyen de déflecteurs 34 situés à l'extrémité de la rampe 33. De préférence, la vitesse de défilement de la bande de nettoyage 28′ sera réglée de manière à obtenir une vitesse d'avance des objets 29 sensiblement égale à la vitesse de défilement de la bande 26 du convoyeur.

Il apparaît clairement que cet appareil de nettoyage 27 ne sera pleinement efficace que si les objets 29, une fois nettoyés, sont ramenés sur une bande transporteuse propre, ce qui n'est pas le cas si on utilise la bande qui a déjà servi à transporter les objets seuls.

C'est la raison pour laquelle l'invention prévoit en outre un système de nettoyage supplémentaire 35 de type classique, par exemple à brosses rotatives, permettant de nettoyer la bande transporteuse 26 entre les moyens de transfert 30 situés en amont et les déflecteurs 34 situés en aval.

Il est clair que dans le cas où le convoyeur est réalisé à l'aide de deux bandes transporteuses 40, 40′ disposées bout à bout et où le dispositif de nettoyage 27 est placé au niveau de la jonction entre les deux bandes 40, 40′, le système de nettoyage supplémentaire 35 n'est pas nécessaire puisqu'à la sortie du dispositif de nettoyage 27, les objets 29 seront transférés sur une bande transporteuse propre 40′.

Cette disposition se trouve illustrée sur la figure 2, dans laquelle les traits interrompus 41, 41′ indiquent la zone de jonction entre les deux bandes transporteuses 40, 40′ qui occupent la place de la bande transporteuse 26.

**Revendications**

1. Dispositif de nettoyage utilisant une bande de nettoyage sans fin (1) montée sur au moins trois rouleaux axés parallèlement les uns aux autres, à savoir : deux rouleaux principaux (2, 3) dont l'un au moins (3) est entraîné en rotation, et un rouleau secondaire (4) disposé dans l'espace compris entre les deux rouleaux principaux (2, 3), ces trois rouleaux (2, 3, 4) étant agencés de manière à ce que la bande de nettoyage (1) suive, dans sa partie supérieure, un trajet rectiligne (5) allant du premier (2) au second rouleau principal (3) en formant un plan de nettoyage (6), caractérisé en ce que, dans sa partie inférieure, la bande suit un parcours sinueux comprenant deux portions (7, 8) situées de part et d'autre dudit rouleau secondaire (4), à savoir : une portion amont (7) rectiligne s'étendant du second rouleau principal (3) au rouleau secondaire (4), dans laquelle la bande (1) est soumise en continu à un lavage, et une portion aval (8) rectiligne s'étendant du rouleau secondaire (4) au premier rouleau principal (2), au niveau de laquelle la bande est imprégnée d'un liquide de nettoyage servant à effectuer le susdit nettoyage, et en ce que les deux rouleaux principaux (2, 3) sont partiellement immergés dans le liquide de nettoyage, respectivement dans le liquide de lavage, le rouleau secondaire et la bande supportée par lui étant en dehors du liquide.

**2.** Dispositif selon la revendication 1, caractérisé en ce qu'il comprend en outre un premier rouleau d'essorage (12) venant s'appliquer sur la portion de bande (1) passant sur le premier rouleau principal (2).

**3.** Dispositif selon l'une des revendications 1 et 2, caractérisé en ce qu'il comprend en outre un second rouleau d'essorage (9) agissant sur la bande (1) au niveau du rouleau secondaire (4), de manière à extraire le liquide de lavage demeuré sur la bande (1).

**4.** Dispositif selon l'une des revendications précédentes, caractérisé en ce qu'il comprend en outre deux bacs (14,15), à savoir : un bac de liquide de nettoyage (14) et un bac de liquide de lavage (15), disposés sous la bande (1) respectivement dans les zones de lavage et d'application de liquide de nettoyage, pour recueillir séparément les liquides utilisés dans ces deux zones.

**5.** Dispositif selon l'une des revendications précédentes, caractérisé en ce que le susdit rouleau secondaire (4) est disposé entre les deux rouleaux principaux de manière à ce que la partie inférieure de la bande (1) suive un parcours sinueux comprenant un trajet ascendant (7) compris entre le deuxième rouleau principal (3) et le rouleau de tension (4), et un trajet descendant (8) allant du rouleau de tension (4) au premier rouleau principal (2).

**6.** Dispositif selon la revendication 5, caractérisé en ce qu'il comprend une rampe d'injection de liquide de lavage (18) émettant une succession de jets sur le trajet ascendant de la bande de nettoyage (1).

**7.** Dispositif selon l'une des revendications précédentes, caractérisé en ce que, dans le cas où il sert au nettoyage d'une bande transporteuse (19), la face supérieure de la bande de nettoyage (1) qui forme le plan de nettoyage est maintenue appliquée contre la bande transporteuse (19), et est entraînée de manière à posséder une vitesse de défilement différente de celle de la bande transporteuse (19).

**8.** Dispositif selon l'une des revendications 1 à 6, caractérisé en ce que, dans le cas où il est utilisé pour le nettoyage des surfaces de sustentation d'objets, il comprend en outre des moyens (33) permettant d'effectuer un passage forcé desdits objets sur la susdite face de nettoyage (28) avec une vitesse de passage différente de la vitesse de défilement de ladite bande de nettoyage (28').

**9.** Dispositif selon la revendication 8, selon lequel les susdits objets proviennent d'un convoyeur (26). caractérisé en ce qu'il comprend en outre des moyens (30,31) permettant d'assurer le transfert des objets (29) provenant du convoyeur (26) sur l'aire de nettoyage (28), des moyens permettant d'entraîner la bande de nettoyage (28') dans le sens de défilement du convoyeur (26), mais à une vitesse de défilement de préférence supérieure à celle dudit convoyeur (26), et des moyens de déflexion (33) s'étendant sur ladite aire de nettoyage (28) de manière à ralentir l'avance des objets et les guider vers une aire de sortie (34) du dispositif.

**10.** Dispositif selon la revendication 9, caractérisé en ce que les susdits moyens de transfert comprennent une aire d'accumulation (31) des objets (29).

**11.** Dispositif selon la revendication 10, caractérisé en ce que la sortie (32) de l'aire d'accumulation (31) débouche sur l'aire de nettoyage (28) en un emplacement relativement distant de la bordure de la bande de nettoyage (28') adjacente au convoyeur (26), et en ce que les susdits moyens de déflexion (33) s'étendent obliquement par rapport à l'axe longitudinal de la bande de nettoyage (28') depuis ladite sortie (32) jusqu'à une aire de sortie (34) située sur le convoyeur (26), en aval du susdit dispositif de transfert (30,31).

**12.** Dispositif selon la revendication 11, caractérisé en ce qu'il comprend en outre des moyens de nettoyage (35) du convoyeur (26) disposés dans l'intervalle compris entre les susdits moyens de transfert (30,31) et la susdite aire de sortie (34).

**13.** Dispositif selon la revendication 11, caractérisé en ce que le susdit convoyeur est constitué par deux transporteurs à bande (40,40') disposés bout à bout, à savoir : un transporteur amont (40) et un transporteur aval (40'), et en ce que la susdite aire de nettoyage (28) est située au niveau de la zone de jonction (41,41') entre ces deux transporteurs, de manière à ce que les susdits moyens de transfert (30,31') opèrent sur le transporteur amont (40) et que la susdite aire de sortie (34) soit située sur le transporteur aval (40').

## Claims

1. An endless rotary band (1) cleaning device, wherein the endless cleaning band is mounted on at least three rollers disposed parallel to each other, namely : two main rollers (2, 3), one at least of which (3) is driven in rotation and a secondary roller (4), disposed in the space between the two main rollers (2, 3), these three rollers (2, 3, 4) being adapted so that the cleaning band (1) follows, in its upper part, a rectilinear path (5) going from the first (2) to the second (3) main roller while forming a cleaning surface (6),
characterized in that, in its lower part, the band follows a sinuous path comprising two portions (7, 8) situated on each side of said secondary roller (4), namely : a rectilinear upstream portion (7) extending from the second main roller (3) to the secondary roller (4), in which the band (1) is continuously subjected to washing and a rectilinear downstream portion (8) extending from the secondary roller (4) to the first main roller (2), at the level of which the band is impregnated with a cleaning liquid for carrying out said cleaning, and in that the two main rollers (2, 3) are partially immersed in the cleaning liquid, respectively in the washing liquid, the secondary roller and the belt staying out of the liquid.

2. The device as claimed in claim 1, characterized in that it comprises a first squeezer roller (12) applied against the band (1) portion passing over the first main roller (2).

3. The device as claimed in one of claims 1 and 2,
characterized in that it further comprises a second squeezer roller (9) acting on the band (1) at the level of the secondary roller (4) so as to extract the washing liquid remaining on the band (1).

4. The device as claimed in one of the preceding claims,
characterized in that it further comprises two tanks (14, 15), namely : a cleaning liquid tank (14) and a washing liquid tank (15), disposed under the band (1) respectively in the washing and cleaning liquid application zones, for separately collecting the liquids used in these two zones.

5. The device as claimed in one of the preceding claims,
characterized in that said secondary roller (4) is disposed between the two main rollers so that the lower part of the band (1) follows a sinuous path including an upgoing path (7) between the second main roller (3) and the tensioning roller (4) and a downgoing path (8) from the tensioning roller (4) to the first main roller (2).

6. The device as claimed in claim 5,
characterized in that it comprises a washing liquid injection ramp (18) providing a succession of jets on the upgoing path of the cleaning band (1).

7. The device as claimed in one of the preceding claims,
characterized in that, in the case where it serves for cleaning a transporter belt (19), the upper face of the cleaning band (1) which forms the cleaning surface is held applied against the transporter belt (19) and is driven so as to have a travel speed different from that of the transporter belt (19).

8. The device as claimed in one of claims 1 to 6, characterized in that, in the case where it is used for cleaning the bottom support surfaces of objects, it further comprises means (33) for forcing said objects over said cleaning face (28) at a speed different from that of said cleaning band (28').

9. The device as claimed in claim 8,, wherein said objects come from a conveyor (26),
characterized in that it further comprises means (30, 31), for transferring the objects (29) from the conveyor (26) to the cleaning area (28), means for driving the cleaning band (28) in the travel direction of the conveyor (26), but at a speed preferably greater than that of said conveyor (26), and deflection means (33) extending over said cleaning area (28) so as to slow down the advance of the objects and guide them towards an exit area (34) from the device.

10. The device as claimed in claim 9,
characterized in that said transfer means comprise an area (31) for accumulating the objects (29).

11. The device as claimed in claim 10,
characterized in that the exit (32) from the accumulation area (31) opens on to the cleaning area (28) at a position relatively removed from the edge of the cleaning band (28') adjacent the conveyor (26), and said deflection means (33) extend obliquely with respect to the longitudinal axis of the cleaning band (28') from said exit (32) as far as an exit area (34) situated on the conveyor (26), downstream of said transfer device (30, 31).

12. The device as claimed in claim 11, characterized in that it further comprises means (35) for cleaning the conveyor (26), disposed in the gap between said transfer means (30, 31) and said exit area (34).

13. The device as claimed in claim 11, characterized in that said conveyor is formed of two belt transporters (40, 40') disposed end to end, namely: an upstream transporter (40) and a downstream transporter (40'), and in that said cleaning area (28) is situated at the level of the junction zone (41, 41') between these two transporters, so that said transfer means (30, 31') cooperate with the upstream transporter (40) and said exit area (34) is situated on the downstream transporter (40').

**Patentansprüche**

1. Reinigungsvorrichtung mit einem endlosen Reinigungsband (1), welches auf mindestens drei Walzen mit parallen Achsen montiert ist, nämlich : zwei Hauptwalzen (2, 3), von denen zumindestens eine (3) in Drehung versetzt wird und eine, im Freiraum zwischen den beiden Hauptwalzen (2, 3) angeordnete Sekundärwalze (4), wobei besagte drei Walzen (2, 3, 4) so angeordnet sind, dass der obere Teil des Reinigungsbandes (1) eine gerade, von der ersten (2) bis zur zweiten (3) Hauptwalze reichende, Strecke (5) zurücklegt und eine Reinigungsfläche (6) bildet,
dadurch gekennzeichnet, dass der untere Teil des Bandes eine kurvenreiche Strecke zurücklegt, die aus zwei Abschnitten (7, 8) beiderseits der besagten Sekundärwalze (4) besteht, nämlich : einem gradlinigen oberen Abschnitt (7), der von der zweiten Hauptwalze (3) bis zur Sekundärwalze (4) reicht, wo das Band (1) einer ständigen Wäsche unterworfen ist und einem unteren gradlinigen Abschnitt (8), der von der Sekundärwalze (4) bis zur ersten Hauptwalze (2) reicht und wo das Band mit einer Reinigungsflüssigkeit getränkt wird, um besagte Reinigung vorzunehmen, und dass die beiden Hauptwalzen (2, 3) teilweise in die Reinigungs-, bzw. Waschflüssigkeit eintauchen und die Sekundärwalze und das von ihr gehaltene Band sich ausserhalb der Flüssigkeit befinden.

2. Vorrichtung nach Anspruch 1, dadurch gekennzeichnet, dass sie ausserdem eine erste Trockenwalze (12) aufweist, die gegen den Abschnitt des Bandes (1) angelegt wird, welcher über die erste Hauptwalze (2) läuft.

3. Vorrichtung nach einem der Ansprüche 1 und 2, dadurch gekennzeichnet, dass sie ausserdem eine zweite Trockenwalze (9) aufweist, welche im Bereich der Sekundärwalze (4) auf das Band (1) wirkt, um die auf dem Band (1) verbliebene Waschflüssigkeit abzuführen.

4. Vorrichtung nach einem der vorhergehenden Ansprüche, dadurch gekennzeichnet, dass sie ausserdem zwei Behälter (14, 15) aufweist, nämlich : einen Behälter für die Reinigungsflüssigkeit (14) und einen Behälter für die Waschflüssigkeit (15), die beide unter dem Band (1) angeordnet sind und zwar jeweils in der Waschzone und in der Zone, wo die Reinigungsflüssigkeit aufgebracht wird, um getrennt die in diesen beiden Zonen verwendeten Flüssigkeiten zu sammeln.

5. Vorrichtung nach einem der vorhergehenden Ansprüche, dadurch gekennzeichnet, dass besagte Sekundärwalze (4) zwischen den beiden Hauptwalzen angeordnet ist, sodass der untere Teil des Bandes (1) eine kurvenreiche Strecke zurücklegt, bestehend aus einer ansteigenden Strecke (7) zwischen der zweiten Hauptwalze (3) und der Spannwalze (4) und einer absteigenden Strecke (8), die von der Spannwalze (4) bis zur ersten Hauptwalze (2) führt.

6. Vorrichtung nach Anspruch 5, dadurch gekennzeichnet, dass sie eine Waschflüssigkeitsspritzrampe (18) aufweist, welche auf den ansteigenden Abschnitt des Reinigungsbandes (1) eine Reihe von Flüssigkeitsstrahlen abgibt.

7. Vorrichtung nach einem der vorhergehenden Ansprüche, dadurch gekennzeichnet, dass, wenn sie zur Reinigung eines Förderbandes (19) dient, die Oberseite des Reinigungsbandes (1), welche die Reinigungsfläche bildet, an das Förderband (19) angelegt und so angetrieben wird, dass ihre Laufgeschwindigkeit von der des Förderbandes (19) abweicht.

8. Vorrichtung nach einem der Ansprüche 1 bis 6,
dadurch gekennzeichnet, dass, wenn sie zur Reinigung von Gegenstände tragenden Flächen dient, sie ausserdem Mittel (33) aufweist, um besagte Gegenstände über besagte Reinigungsfläche (28) laufen zu lassen, mit einer Geschwindigkeit, die von der Laufgeschwindigkeit des besagten Reinigungsbandes (28') abweicht.

9. Vorrichtung nach Anspruch 8, nach der besagte Gegenstände von einer Transportvorrichtung (26) kommen,
dadurch gekennzeichnet, dass sie ausserdem Mittel (30, 31) aufweist, um die von der Transportvorrichtung (26) kommenden Gegenstände auf die Reinigungsfläche (28) zu überführen, Mittel, um das Reinigungsband (28') in Laufrichtung der Transportvorrichtung (26) anzutreiben, aber mit einer vorzugsweise höheren Laufgeschwindigkeit als die der Transportvorrichtung (26), sowie sich über besagte Reinigungsfläche (28) erstreckende Ablenkmittel (33), um den Vorschub der Gegenstände zu verlangsamen und sie auf einen Ausgangsbereich (34) der Vorrichtung hin zu lenken.

10. Vorrichtung nach Anspruch 9,
dadurch gekennzeichnet, dass besagte Überführungsmittel einen Sammelbereich (31) für die Gegenstände (29) aufweisen.

11. Vorrichtung nach Anspruch 10,
dadurch gekennzeichnet, dass der Ausgang (32) des Sammelbereiches (31) in den Reinigungsbereich (28) mündet und zwar an einer Stelle, die relativ weit entfernt ist vom der Transportvorrichtung (26) benachbarten Rand des Reinigungsbandes (28') und dass besagte Ablenkmittel (33) schräg zur Längsachse des Reinigungsbandes (28') verlaufen und zwar vom besagten Ausgang (32) bis zu einem unterhalb der Überführungsmittel (30, 31) auf der Transportvorrichtung (26) angeordneten Ausgangsbereich (34).

12. Vorrichtung nach Anspruch 11,
dadurch gekennzeichnet, dass sie ausserdem Reinigungsmittel (35) für die Transportvorrichtung (26) aufweist, die im Freiraum zwischen besagten Überführungsmitteln (30, 31) und besagtem Ausgangsbereich (34) angeordnet sind.

13. Vorrichtung nach Anspruch 11,
dadurch gekennzeichnet, dass besagte Transportvorrichtung von zwei nacheinander und zusammenstossend angeordneten Bandtransportern (40, 40') gebildet wird, d. h. einem oberen Transporter (40) und einem unteren Transporter ((40') und dass besagter Reinigungsbereich (28) sich in Höhe der Verbindungszone (41, 41') der beiden Transporter befindet, sodass besagte Überführmittel (30, 31) auf den oberen Transporter (40) wirken und besagter Ausgangsbereich (34) auf dem unteren Transporter (40') angeordnet ist .

# FIG.1

# FIG.2

EP 0 312 437 B1